(19) Europäisches Patentamt
European Patent Office
Office européen des brevets

(11) **EP 4 301 194 B1**

(12) **EUROPÄISCHE PATENTSCHRIFT**

(45) Veröffentlichungstag und Bekanntmachung des Hinweises auf die Patenterteilung:
**24.12.2025  Patentblatt 2025/52**

(21) Anmeldenummer: **22706605.7**

(22) Anmeldetag: **18.02.2022**

(51) Internationale Patentklassifikation (IPC):
***A47L 9/20*** *(2006.01)*

(52) Gemeinsame Patentklassifikation (CPC):
**A47L 9/20**

(86) Internationale Anmeldenummer:
**PCT/EP2022/054061**

(87) Internationale Veröffentlichungsnummer:
**WO 2022/184469 (09.09.2022 Gazette 2022/36)**

(54) **BELÜFTUNGSEINHEIT FÜR EIN SAUGGERÄT, VERFAHREN ZUM BELÜFTEN EINES SAUGGERÄTS, SAUGGERÄT UND VERWENDUNG EINES LUFTSTROMS ZUR ABREINIGUNG EINES FILTERS DES SAUGGERÄTS**

VENTILATING UNIT FOR A SUCTION APPARATUS, METHOD FOR VENTILATING A SUCTION APPARATUS, SUCTION APPARATUS AND USE OF AN AIR FLOW FOR CLEANING A FILTER OF THE SUCTION APPARATUS

UNITÉ D'AÉRATION POUR UN ASPIRATEUR, PROCÉDÉ D'AÉRATION D'UN ASPIRATEUR, ASPIRATEUR ET UTILISATION D'UN FLUX D'AIR POUR NETTOYER UN FILTRE DE L'ASPIRATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2021  EP 21160460**

(43) Veröffentlichungstag der Anmeldung:
**10.01.2024  Patentblatt 2024/02**

(73) Patentinhaber: **Hilti Aktiengesellschaft**
**9494 Schaan (LI)**

(72) Erfinder: **OHLENDORF, Oliver**
**86899 Landsberg (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**WO-A1-2019/161901     DE-A1- 102013 007 183**
**US-A- 5 951 746**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine Belüftungseinheit für ein Sauggerät, wobei die Belüftungseinheit dazu eingerichtet ist, einen Luftstrom in einen Innenraum des Sauggeräts einzulassen, wobei die Belüftungseinheit ein erstes Schiebe-Element und ein zweites Schiebe-Element aufweist, die mit einem Verbindungselement verbunden vorliegen, wobei das erste Schiebe-Element, das zweite Schiebe-Element und das Verbindungselement eine Wirkeinheit bilden, die von einem Aktuator von einer Geschlossen-Stellung in eine Offen-Stellung bringbar ist, und umgekehrt. In einem zweiten Aspekt betrifft die Erfindung ein Verfahren zum Belüften eines Sauggeräts mit einer vorgeschlagenen Belüftungseinheit, wobei zunächst ein Sauggerät mit einer Belüftungseinheit bereitgestellt wird, deren Wirkeinheit in einer Geschlossen-Stellung vorliegt. Durch eine Betätigung des Aktuators wird die Wirkeinheit in eine Offen-Stellung gebracht wird, so dass der Innenraums der Belüftungseinheit und/oder des Sauggeräts durch einen Luftstrom belüftet werden kann, der durch eine von einem ersten Schiebe-Elements freigegebene erste Öffnung der Belüftungseinheit in den Innenraum der Belüftungseinheit und/oder des Sauggeräts eindringen kann. In weiteren Aspekten betrifft die Erfindung die Verwendung eines Luftstroms, der unter Verwendung einer vorgeschlagenen Belüftungseinheit in das Innere eines Sauggeräts geleitet werden kann, sowie ein Sauggerät mit einer vorgeschlagenen Belüftungseinheit.

## Hintergrund der Erfindung:

Im Stand der Technik sind Sauggeräte, wie Staubsauger, bekannt, die Filter aufweisen, die regelmäßig abgereinigt werden müssen. Anderenfalls können die Filter verstopfen, so dass ein Betrieb mit dem Sauggerät nicht mehr möglich ist. Zugesetzte Filter können auch dafür sorgen, dass das Filtervermögen bzw. die Filterleistung des Filters abnimmt und Staub und Verunreinigungen in den Bereich der empfindlichen Bestandteile des Sauggeräts, wie Turbine oder Motor, gelangen können. Insofern besteht ein Bedürfnis, für die Abreinigung von Filtern in Sauggeräten technische Lösungen bereitzustellen.

Im Stand der Technik sind beispielsweise mechanische Verfahren zur Filterabreinigung bekannt, bei denen die Filter abgeklopft werden. Diese mechanischen Belastungen können aber zu unerwünschten Erschütterungen des gesamten Sauggeräts führen, die empfindliche Bestandteile des Sauggeräts beschädigen können.

Darüber hinaus sind im Stand der Technik Rückspülverfahren zur Filterabreinigung bekannt, in denen der mindestens ein Filter während der Filterabreinigung von einem Abreinigungs-Luftstrom durchströmt wird, wobei der Abreinigungs-Luftstrom dem Saugluftstrom des Sauggeräts vorzugsweise entgegengerichtet ist. Bei der Rückspülung von Filtern in Sauggeräten wird, um einen kontinuierlichen Saugbetrieb aufrecht zu erhalten, häufig mit zwei Filtern und zwei Filterkammern gearbeitet, die abwechselnd abgereinigt werden können, so dass stets mit mindestens einer Kammer der Saugbetrieb des Sauggeräts fortgeführt werden kann. Nachteilig an diesen bekannten Lösungen ist aber, dass sie in der Regel sehr bauraum-intensiv sind und verhindern, dass kleine, kompakte Sauggeräte bereitgestellt werden können. Eine Belüftungseinheit gemäß dem Oberbegriff des Anspruchs 1 ist z.B. aus DE-A-102013007183 bekannt.

Die Aufgabe, die der vorliegenden Erfindung zugrunde liegt, besteht darin, die vorstehend beschriebenen Mängel und Nachteile des Standes der Technik zu überwinden und Belüftungseinheit für ein Sauggerät bereitzustellen, mit der kleine, kompakte Sauggeräte hergestellt werden können. Darüber hinaus soll die bereitzustellende Belüftungseinheit einen geringen Energieverbrauch haben und wenig wartungsanfällig sein.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

## Beschreibung der Erfindung:

Erfindungsgemäß ist eine Belüftungseinheit für ein Sauggerät vorgesehen, wobei die Belüftungseinheit dazu eingerichtet ist, einen Luftstrom in einen Innenraum des Sauggeräts einzulassen. Die Belüftungseinheit weist ein erstes Schiebe-Element und ein zweites Schiebe-Element auf, die mit einem Verbindungselement verbunden vorliegen, wobei das erste Schiebe-Element, das zweite Schiebe-Element und das Verbindungselement eine Wirkeinheit bilden, die von einem Aktuator von einer Geschlossen-Stellung in eine Offen-Stellung bringbar ist, und umgekehrt.

Die Überführung der Wirkeinheit von der Geschlossen-Stellung in die Offen-Stellung wird im Sinne der Erfindung bevorzugt als «Öffnen der Belüftungseinheit» bezeichnet. Das Einlassen des Lüftungsstroms in das Innere der Belüftungseinheit und/oder in das Innere des Sauggeräts wird im Sinne der Erfindung bevorzugt als Belüftung bezeichnet. Es ist im Sinne der Erfindung besonders bevorzugt, dass durch das Öffnen der Belüftungseinheit ein Luftstrom erzeugt wird, der in einen Unterdruckbereich des Sauggeräts strömen kann. Der Unterdruckbereich des Sauggeräts ist vorzugsweise der Innenraum des Sauggeräts, der während des Betriebs des Sauggeräts mit einem Unterdruck beaufschlagt ist, wobei der Unterdruck verwendet wird, um Staub oder Verunreinigungen einzusaugen. Durch den Unterdruck wird vorzugsweise ein Luftstrom erzeugt, mit dem die Verunreinigungen in das Innere des Sauggeräts eingesaugt werden können. Dieser Luftstrom wird im Sinne der Erfindung bevorzugt als Saugluftstrom bezeichnet. Vorzugsweise liegt bei Saugbetrieb des Sauggeräts ein Druckunterschied zwischen dem Innenraum des Sauggeräts und der Umgebung des Sauggeräts vor, wobei in der Umgebung des Sauggeräts insbesondere ein Atmosphärendruck vorliegt.

Beim Öffnen der Belüftungseinheit wird durch den Druckunterschied zwischen der Atmosphäre und dem Innenraum des Sauggeräts die Luft hochdynamisch in das Innere des Sauggeräts eingesaugt. Der beschleunigte Luftstrom kann im Sinne der Erfindung vorzugsweise auch als Belüftungsluftstrom bezeichnet werden. Er dringt in das Innere des Sauggeräts ein und kann insbesondere in Richtung eines Filterelements, einer Abreinigungseinheit oder eines Filters des Sauggeräts geleitet werden. Sauggeräte weisen Filter auf, um empfindliche Bestandteile des Sauggeräts, wie die Turbine oder den Motor, vor Verunreinigungen und Staub zu schützen. Es ist im Sinne der Erfindung bevorzugt, dass der mit der vorgeschlagenen Belüftungseinheit erzeugte Luftstrom direkt oder indirekt eine Abreinigung des Filters bewirkt. Dies kann beispielsweise durch eine Rückspülung des Filters oder eine Druckstossabreinigung erfolgen.

Vorzugsweise liegt die Belüftungseinheit in einem Sauggerät integriert vor. Mit anderen Worten kann die vorgeschlagene Belüftungseinheit ein Modul bilden, das integriert in einem Sauggerät zu dessen Belüftung vorliegt. Die Belüftungseinheit kann mindestens eine offene Seite aufweisen, wobei diese offene Seite der Belüftungseinheit mit einem Innenraum bzw. mit dem Unterdruckbereich des Sauggeräts verbunden sein kann. Vorzugsweise liegt bei Betrieb des Sauggeräts in dem Gerät bzw. in seinem Unterdruckbereich ein Unterdruck vor. Dieser Unterdruck kann beispielsweise von einer Turbine erzeugt werden, die von einem Motor angetrieben werden kann. Außerhalb der Belüftungseinheit bzw. außerhalb des Sauggeräts liegt vorzugsweise Atmosphärendruck vor. Der Fachmann weiß, dass dieser Atmosphärendruck bei ca. 1,013 hPa liegt oder geringen Schwankungen unterliegt. Es ist im Sinne der Erfindung bevorzugt, dass der Innenraum der Belüftungsvorrichtung und der Innenraum des Sauggeräts miteinander verbunden sind.

Die Belüftungseinheit weist ein erstes Schiebe-Element und ein zweites Schiebe-Element aufweist, wobei die Schiebe-Elemente mit dem Verbindungselement vorzugsweise wirkverbunden vorliegen. Das Verbindungselement ist vorzugsweise dazu eingerichtet, die Schiebe-Elemente miteinander zu verbinden, so dass eine Wirkeinheit gebildet wird. Die vorgeschlagene Belüftungseinheit umfasst darüber hinaus einen Aktuator, der dazu eingerichtet ist, die Wirkeinheit von einer Geschlossen-Stellung in eine Offen-Stellung zu bringen («Öffnen der Belüftungseinheit» oder «Belüften»). Selbstverständlich ist der Aktuator auch dazu eingerichtet, die Wirkeinheit von einer Offen-Stellung in eine Geschlossen-Stellung zu bringen.

Es ist im Sinne der Erfindung bevorzugt, dass erste Schiebe-Element der Belüftungsvorrichtung als Einlassschieber und das zweite Schiebe-Element als Kompensationsschieber wirkt. Mit anderen Worten kann der Belüftungsluftstrom von dem Einlassschieber in das Innere der Belüftungseinheit bzw. des Sauggeräts eingelassen werden. Es ist im Sinne der Erfindung bevorzugt, das erste Schiebe-Element auch als ersten Schieber oder als erstes Schieber-Element zu bezeichnen, während das zweite Schiebe-Element vorzugsweise auch als zweiter Schieber oder als zweites Schieber-Element bezeichnet werden kann.

Es ist im Sinne der Erfindung bevorzugt, dass der Aktuator dazu eingerichtet ist, die Wirkeinheit der Belüftungseinheit mit einer lateralen Bewegung hin- und herzubewegen. Diese laterale Bewegung kann auch als Seitwärtsbewegung bezeichnet werden. Durch diese seitliche Verschiebung der Wirkeinheit, die vorteilhafterweise von dem Aktuator bewirkt wird, kann auf der Seite des Einlassschiebers die erste Öffnung der Belüftungseinheit geöffnet oder geschlossen werden. Dies führt vorteilhafterweise dazu, dass in der Offen-Stellung der Wirkeinheit ein Belüftungsluftstrom in das Innere der vorgeschlagenen Belüftungseinheit eindringen und einen Abreinigungsprozess des mindestens einen Filter des Sauggeräts bewirken kann. Auf der Seite der Belüftungseinheit, auf der der Kompensationsschieber der Wirkeinheit angeordnet vorliegt, kann durch das Zusammenwirken des Kompensationsschiebers mit einer elastischen Membran vorteilhafterweise das Volumen des Innenraums der Belüftungseinheit verändert werden. Selbstverständlich können im Kontext der vorliegenden Erfindung ergänzend oder alternativ auch andere Abdichtlösungen eingesetzt werden. In Frage kommen beispielsweise O-Ringe oder Dichtlippen, ohne darauf beschränkt zu sein.

Zur Illustration eines Ausführungsbeispiels der Erfindung wird im Folgenden die Seite der Belüftungseinheit, auf der der erste Schieber angeordnet vorliegt, als linke Seite der Belüftungseinheit bezeichnet, während die Kompensationsschieber-Seite als rechte Seite der Belüftungseinheit bezeichnet wird. Es ist im Sinne der Erfindung bevorzugt, dass die linke Seite der Belüftungseinheit eine erste Öffnung aufweist, während die rechte Seite der Belüftungseinheit eine zweite Öffnung aufweist. Die erste Öffnung der Belüftungseinheit wirkt vorzugsweise mit dem ersten Schiebe-Element zusammen, während die zweite Öffnung mit dem zweiten Schiebe-Element zusammenwirkt.

In einem zweiten Aspekt betrifft die Erfindung ein Verfahren zum Belüften eines Sauggeräts mit einer vorgeschlagenen Belüftungseinheit, wobei das Verfahren durch die folgenden Verfahrensschritte gekennzeichnet ist:

a) Bereitstellung eines Sauggeräts mit einer vorgeschlagenen Belüftungseinheit, wobei die Wirkeinheit in einer Geschlossen-Stellung vorliegt,
b) Betätigung des Aktuators, so dass die Wirkeinheit durch den Aktuator in eine OffenStellung gebracht wird,

c) Belüftung eines Innenraums der Belüftungseinheit und/oder des Sauggeräts durch einen Luftstrom, der durch eine von einem ersten Schiebe-Elements freigegebene erste Öffnung der Belüftungseinheit in den Innenraum der Belüftungseinheit und/oder des Sauggeräts eindringen kann.

Die für die Belüftungseinheit eingeführten Begriffe, Definitionen und technischen Vorteile gelten vorzugsweise für das Belüftungsverfahren, das Sauggerät und die Verwendung des Luftstroms zur Abreinigung eines Filters des Sauggeräts analog. Die Wirkeinheit befindet sich zunächst in einer Geschlossen-Stellung. In dieser Geschlossen-Stellung der Wirkeinheit ist vorzugsweise kein Luftstrom durch die Belüftungseinheit vorgesehen und das Sauggerät kann einen Saugbetrieb durchführen, bei dem Staub eingesaugt wird.

Die Geschlossen-Stellung der Wirkeinheit ist vorzugsweise dadurch gekennzeichnet, dass der erste Schieber bzw. sein Abschlusselement die erste Öffnung der Belüftungseinheit abdeckt. Dadurch ist die erste Öffnung der Belüftungseinheit verschlossen. Die Verschluss- bzw. Abdeckung der ersten Öffnung durch bevorzugt den oberen Balken des ersten Schiebe-Elements kann durch die Vorsehung von Dichtungselementen zwischen einem Gehäuse der Belüftungseinheit und dem ersten Schiebelement weiter verbessert werden. Es ist im Sinne der Erfindung bevorzugt, dass im Inneren der vorgeschlagenen Belüftungseinheit ein so großes Luftvolumen vorhanden ist, dass durch das Öffnen der ersten Öffnung der Belüftungseinheit ein dynamischer Luftaustausch ermöglicht werden kann.

Es ist im Sinne der Erfindung bevorzugt, dass der zweite Schieber in einer bevorzugten Ausgestaltung der Erfindung im Wesentlichen bündig mit einem Gehäuse der vorgeschlagenen Belüftungseinheit abschließt. Das bedeutet im Sinne der Erfindung bevorzugt, dass ein elastisches Element, das mit dem oberen Bereich des zweiten Schiebe-Elements verbunden vorliegen kann, flach an einer Außenseite der vorgeschlagenen Belüftungseinheit anliegt und zusammen mit dem zweiten Schieber die zweite Öffnung der Belüftungseinheit abschließt. Darüber hinaus ist es im Sinne der Erfindung bevorzugt, dass der obere Balken des bevorzugt T-förmig ausgebildeten zweiten Schiebe-Elements kleiner ist als die zweite Öffnung der Belüftungseinheit ist. Dadurch kann der obere Balken bis zum im Wesentlichen bündigen Abschließen der zweiten Öffnung durch die zweite Öffnung geführt werden. Durch eine Aktivierung des Aktuators kann die Wirkeinheit beispielsweise in eine Raumrichtung nach links bewegt werden. Bei dieser seitlichen Bewegung der Wirkeinheit in die Raumrichtung nach links wird vorteilhafterweise die Wirkeinheit von der Geschlossen-Stellung in die Offen-Stellung überführt. Es ist im Sinne der Erfindung besonders bevorzugt, dass der Aktuator die Wirkeinheit durch eine laterale Seitwärtsbewegung in die Offen-Stellung bringt. Vorzugsweise wird das elastische Element durch die Seitwärtsbewegung der Wirkeinheit zu einer Wölbung veranlasst, wobei die Wölbung in Bezug auf das Innere der vorgeschlagenen Belüftungseinheit konkav ausgebildet ist. Das bedeutet, dass die Wölbung des elastischen Elements dieser Ausgestaltung der Erfindung in das Innere der vorgeschlagenen Belüftungseinheit hinein zeigt, so dass der tiefste Punkt des elastischen Elements im Innenraum der Belüftungseinheit liegt. Die bevorzugt konkave Wölbung des elastischen Elements kann insbesondere dadurch erreicht werden, dass das elastische Element zumindest teilweise mit dem oberen Balken des zweiten Schiebe-Elements verbunden vorliegt, so dass es durch die Seitwärtsbewegung der Wirkeinheit bzw. des zweiten Schiebers mit nach links bewegt wird. Diese Bewegung «nach links» verursacht vorzugsweise die ins Innere der Belüftungseinheit reichende Wölbung des elastischen Elements. Es ist im Sinne der Erfindung bevorzugt, dass durch die elastische Verformung des elastischen Elements zusätzliche mechanische Lösungen zum Hin- und Herbewegen der Wirkeinheit eingespart werden können. Beispielsweise können die elastischen Eigenschaften des vorzugsweise als Elastomermembran ausgebildeten elastischen Elements verwendet werden, um die Wirkeinheit vom geschlossenen Zustand in den geöffneten Zustand der Belüftungseinheit zu bringen.

In einer alternativen Ausgestaltung der Erfindung ist es bevorzugt, dass der zweite Schieber im geschlossenen Zustand für eine kurze Strecke s über das Gehäuse der Belüftungseinheit hinausragt bzw. übersteht. Dieser Überstand des zweiten Schiebers über das Gehäuse der Belüftungseinheit hinaus wird dadurch möglich, dass der obere Balken des bevorzugt T-förmig ausgebildeten zweiten Schiebe-Elements kleiner ist als die zweite Öffnung der Belüftungseinheit. Dadurch kann der obere Balken durch die zweite Öffnung geführt werden oder gleiten und das elastische Element aufspannen. Durch eine Aktivierung des Aktuators kann die Wirkeinheit beispielsweise in eine Raumrichtung nach links bewegt werden. Bei dieser seitlichen Bewegung der Wirkeinheit in die Raumrichtung nach links wird vorteilhafterweise die Wirkeinheit von der Geschlossen-Stellung in die Offen-Stellung überführt. Es ist im Sinne der Erfindung besonders bevorzugt, dass der Aktuator die Wirkeinheit durch eine laterale Seitwärtsbewegung in die Offen-Stellung bringt.

In der Offen-Stellung wird auf der Einlass-Seite der Belüftungseinheit, die vorzugsweise als linke Seite der Belüftungseinheit bezeichnet wird, die erste Öffnung geöffnet, indem sie von dem ersten Schiebe-Element freigegeben wird. Es ist im Sinne der Erfindung bevorzugt, dass sich zwischen dem ersten Schieber und dem Gehäuse der Belüftungseinheit Spalte ausbilden, durch die Luft in das Innere der Belüftungseinheit bzw. des Sauggeräts eindringen kann. Diese eindringende Luft bildet bevorzugt den Belüftungsluftstrom, mit dem der mindestens eine Filter oder eine Abreinigungseinheit des Sauggeräts rück- bzw. durchgespült werden kann. Die durch den Aktuator bewirkte Bewegung der Wirkeinheit in einer Raumrichtung nach links führt auf der rechten Seite der Belüftungseinheit dazu, dass sich der zweite Schieber ebenfalls nach links bewegt, wodurch der Überstand des zweiten Schiebe-Elements abgebaut wird. Am Ende der seitlichen Bewegung der Wirkeinheit ist der Überstand des Kompensationsschiebers im Wesentlichen vollständig abgebaut und der obere Balken des zweiten Schiebers steht vorzugsweise nicht mehr über das Gehäuse der Belüftungseinheit über. Dadurch kann das elastische Element im Wesentlichen vollflächig auf der Außenseite der Belüftungseinheit bzw. auf dem oberen Balken des zweiten Schiebers aufliegen. Die zweite Öffnung bleibt auch in dieser Offen-Stellung der Wirkeinheit von dem zweiten Schieber und dem elastischen Element verschlossen.

Es ist im Sinne der Erfindung bevorzugt, dass der Aktuator einen elektromagnetischen Hubmagneten umfasst. Vorzugsweise kann der Aktuator mit dem Verbindungselement der Wirkeinheit so zusammenwirken, dass eine Aktivierung des Aktuators eine Bewegung der Wirkeinheit hervorruft oder bewirkt. Der Aktuator kann beispielsweise einen hohlen Innenraum umfassen, in dem das Verbindungsmittel geführt wird. Das Verbindungselement der Wirkeinheit kann zum Beispiel starr und/oder als Schubstange ausgebildet sein. Es ist im Sinne der Erfindung bevorzugt, dass mit dem Aktuator eine Öffnungskraft erzeugt werden kann, mit der die Wirkeinheit so seitlich verschoben werden kann, dass das erste Schiebe-Element von der ersten Öffnung der Belüftungseinheit abgehoben wird und die erste Öffnung so freigegeben wird. Luft aus der Umgebung des Sauggeräts, die vorzugsweise unter Atmosphärendruck steht, strömt dadurch hochdynamisch in die Belüftungseinheit ein, wobei das Innere der Belüftungseinheit vorzugsweise in fluidischer Verbindung mit dem mindestens einen Filter des Sauggeräts steht. Der Filter kann durch die einströmende Luft abgereinigt werden, wobei der Belüftungsluftstrom beispielsweise für die Durchführung einer Membranfilterabreinigung, zur Durchführung einer Druckstoßfilterabreinigung oder zur Durchführung einer Rückspülfilterabreinigung verwendet werden kann, ohne darauf beschränkt zu sein.

Selbstverständlich können ergänzend oder alternativ auch anderen Arten von Aktuatoren in der vorgeschlagenen Belüftungseinheit verwendet werden. Beispielsweise kann ein manuell betätigbarer Aktuator verwendet werden. Denkbar ist zum Beispiel auch ein pneumatischer Hubzylinder, um die Wirkeinheit zu bewegen.

Es ist im Sinne der Erfindung bevorzugt, dass der Aktuator bestromt wird, wenn eine Filterabreinigung durchgeführt werden soll. Wenn der Aktuator als elektromagnetischer Hubmagnet ausgebildet ist, entsteht durch das Bestromen vorteilhafterweise ein magnetisches Feld, mit dem die Wirkeinheit bewegt werden kann. Zum Schließen des Einlassschiebers kann der Aktuator gegengepolt werden. Alternativ kann die Bestromung beendet oder umgepolt werden oder ein Federelement oder die elastischen Eigenschaften des elastischen Elements ausgenutzt werden, um die Belüftungseinheit bzw. ihre erste Öffnung wieder zu verschließen. Durch den Verschluss der Belüftungseinheit wird der Belüftungsluftstrom zum Erliegen gebracht und die Abreinigung des mindestens einen Filters des Sauggeräts beendet. Es ist im Sinne der Erfindung bevorzugt, dass eine Zugfeder zwischen dem ersten Schiebe-Element und dem Aktuator angeordnet vorliegen kann, wobei das Öffnen oder Schließen der Belüftungseinheit bzw. ihrer ersten Öffnung mit der Zugfeder deutlich erleichtert werden kann. Insbesondere können die Spannkräfte der Feder dafür verwendet werden, das Öffnen oder Schließen der Belüftungseinheit zu vereinfachen.

Ein wesentlicher Vorteil der Erfindung besteht darin, dass der Aktuator zum Bewegen der Wirkeinheit, insbesondere zum Öffnen der Belüftungseinheit, nur eine geringe Kraft aufbringen bzw. lediglich geringe Gegenkräfte überwinden muss. Bei diesen Gegenkräften handelt es sich insbesondere um Reibungskräfte bzw. um Walkkräfte, die dem elastischen Element innewohnen können. Dadurch kann ein besonders kompakter und energieeffizienter Aktuator verwendet werden. Wenn eine vorgeschlagene Belüftungseinheit in einem akkubetriebenen Sauggerät verwendet wird, kann durch die Erfindung vorteilhafterweise die Laufzeit des Akkumulators («Akkus») verlängert werden. Bei einem Netzbetrieb reduziert sich der Energieverbrauch, sowie die Betriebskosten des Geräts. Vorzugsweise benötigt eine vorgeschlagene Belüftungseinheit weniger Bauraum als vergleichbare konventionelle Einheiten, die aus dem Stand der Technik bekannt sind. Dadurch kann das Sauggerät insgesamt kompakt und volumenoptimiert hergestellt werden.

Es ist im Sinne der Erfindung bevorzugt, dass die Belüftungseinheit eine erste Öffnung aufweist, die von dem ersten Schiebe-Element verschliessbar ist. Es ist im Sinne der Erfindung insbesondere bevorzugt, dass die erste Öffnung des Belüftungseinheit vor allem in der Geschlossen-Stellung der Wirkeinheit von dem ersten Schieber verschlossen wird, während die erste Öffnung der Belüftungseinheit in der Offenstellung der Wirkeinheit von dem ersten Schieber freigegeben wird, so dass der Belüftungsluftstrom in das Innere des Sauggeräts eindringen kann. Das Einströmen des Belüftungsluftstroms wird vorteilhafterweise durch den Druckunterschied, der bei Betrieb des Sauggeräts zwischen der Umgebung des Sauggeräts und dem Inneren des Sauggeräts besteht, befördert. Es wird daher im Kontext der vorliegenden Erfindung auch von einem Einsaugen des Belüftungsluftstroms gesprochen. Vorzugsweise kann die erste Öffnung der Belüftungseinheit in der Geschlossen-Stellung der Wirkeinheit von dem ersten Schieber verschlossen werden. Der erste Schieber kann dazu beispielsweise T-förmig ausgebildet sein, wobei der obere Balken des bevorzugt T-förmig ausgebildeten ersten Schiebers eine größere Fläche als die erste Öffnung der Belüftungseinheit aufweisen und die Öffnung auf diese Weise abdecken und verschließen kann. Der untere Bereich des bevorzugt T-förmig ausgebildeten ersten Schiebers ragt vorzugsweise in das Innere der Belüftungseinheit hinein und bildet den Übergang zum Verbindungselement.

Es ist im Sinne der Erfindung bevorzugt, dass der obere Balken des bevorzugt T-förmig ausgebildeten ersten Schiebers auf einer Außenseite der vorgeschlagenen Belüftungseinheit angeordnet ist. Mit anderen Worten ist es bevorzugt, dass der erste Schieber die Belüftungseinheit in Richtung einer Umgebung des Sauggeräts abdeckt bzw. abdichtet. Der obere Balken des bevorzugt T-förmig ausgebildeten ersten Schiebers kann vorzugsweise als Abschlusselemente bezeichnet werden.

Es ist im Sinne der Erfindung bevorzugt, dass das erste Schiebe-Element eine erste Wirkfläche aufweist, die im Wesentlichen einer Größe der ersten Öffnung der Belüftungseinheit entspricht. Es ist im Sinne der Erfindung bevorzugt, dass der obere Balken des bevorzugt T-förmig ausgebildeten ersten Schiebers größer ist als die erste Öffnung der Belüftungseinheit. Vorzugsweise entspricht die Fläche dieses Abschlusselements der Wirkfläche des ersten Schiebers, mit der die erste Öffnung der Belüftungseinheit abgedeckt bzw. verschlossen wird.

Es ist im Sinne der Erfindung bevorzugt, dass die Belüftungseinheit eine zweite Öffnung aufweist. Vorzugsweise kann die zweite Öffnung der Belüftungseinheit von dem zweiten Schiebe-Element in Verbindung mit einem elastischen Element verschlossen werden. Es ist im Sinne der Erfindung bevorzugt, dass die erste Öffnung und die zweite Öffnung auf gegenüberliegenden Seitenwänden der Belüftungseinheit angeordnet vorliegen. Das bedeutet im Sinne der Erfindung bevorzugt, dass die erste und die zweite Öffnung an gegenüberliegenden Seiten der Belüftungseinheit angeordnet sind. Vorzugsweise stellen die Öffnungen Öffnungen im Gehäuse der Belüftungseinheit dar, wobei die zweite Öffnung in allen Betriebszuständen der Belüftungseinheit bzw. des Sauggeräts verschlossen ist, während die erste Öffnung geschlossen oder geöffnet vorliegen kann.

Der zweite Schieber kann beispielsweise ebenfalls T-förmig ausgebildet sein, wobei der obere Balken des bevorzugt T-förmig ausgebildeten zweiten Schiebers eine kleinere Fläche als die zweite Öffnung der Belüftungseinheit aufweist. Dadurch kann der oberen Balken des zweiten Schiebers durch die zweite Öffnung der Belüftungseinheit hindurchbewegt werden, ohne die zweite Öffnung zu verschließen oder mit ihr in Berührung zu kommen. Der untere Bereich des bevorzugt T-förmig ausgebildeten zweiten Schiebers ragt vorzugsweise in das Innere der Belüftungseinheit hinein und bildet den Übergang zum Verbindungselement. Es ist im Sinne der Erfindung bevorzugt, dass der erste und der zweite Schieber achsengespiegelt zu einander in der vorgeschlagenen Belüftungseinheit angeordnet vorliegen.

Das bedeutet im Sinne der Erfindung bevorzugt, dass jeweils die unteren Bereiche der bevorzugt T-förmig ausgebildeten Schiebe-Elemente in das Innere der Belüftungseinheit hineinragen und sich treffen würden, wenn sie nicht von dem Verbindungselement voneinander getrennt wären.

Es ist im Sinne der Erfindung bevorzugt, dass die zweite Öffnung des Belüftungseinheit von dem zweiten Schieber in Verbindung mit einem elastischen Element zu allen Betriebszeiten des Sauggeräts und in den verschiedenen Stellungen der Wirkeinheit verschlossen wird, während die erste Öffnung der Belüftungseinheit in der Offen-Stellung der Wirkeinheit von dem ersten Schieber freigegeben wird, so dass der Belüftungsluftstrom in das Innere des Sauggeräts eindringen kann.

Es ist im Sinne der Erfindung bevorzugt, dass der zweite Schieber dazu eingerichtet ist, die zweite Öffnung der Belüftungseinheit zu verschließen. Dieser Verschluss erfolgt vorzugsweise zusammen mit einem elastischen Element, das beispielsweise als Elastomermembran ausgeführt sein kann. Das elastische Element kann über das zweite Schiebe-Element und die zweite Öffnung gespannt sein und die zweite Öffnung der Belüftungseinheit auf diese Weise abdecken bzw. verschließen. Das elastische Element kann in der Geschlossen-Stellung der Wirkeinheit im Wesentlichen vollflächig auf dem Kompensationsschieber aufliegen und in dieser Stellung mit dem zweiten Schieber das Volumen V einschließen. Ein wesentlicher Vorteil der Erfindung besteht darin, dass der Ausgleich des Druckes insbesondere unabhängig vom Differenzdruck in dem Sauggerät erfolgen kann.

Es ist im Sinne der Erfindung bevorzugt, dass das zweite Schiebe-Element eine zweite Wirkfläche aufweist, die im Wesentlichen einer Größe eines oberen Balkens des zweiten Schiebers entspricht. Der Druckausgleich, der durch die vorliegende Erfindung ermöglicht wird, basiert vorzugsweise darauf, dass die Kräfte, die auf die Schiebe-Elemente der Wirkeinheit der Belüftungseinheit wirken einander entgegengesetzt und im Wesentlich gleich oder ähnlich groß sind. Vorzugsweise wirkt auf das erste Schiebe-Element eine erste Kraft, die im Sinne der Erfindung bevorzugt auch als Einlasskraft $F\_AE$ bezeichnet wird. Sie wirkt gemäß der oben eingeführten Raumrichtungen in eine Raumrichtung nach rechts, d.h. von der Einlassseite der Belüftungseinheit in Richtung der Kompensationsseite der Belüftungseinheit. Die Wirkrichtungen der entsprechenden Kräfte sind in den Abbildungen durch Pfeile dargestellt. Es ist im Sinne der Erfindung bevorzugt, das auf das zweite Schiebe-Element eine zweite Kraft wirkt, die im Sinne der Erfindung bevorzugt auch als Kompensationskraft $F\_AK$ bezeichnet wird. Sie wirkt gemäß der oben eingeführten Raumrichtungen in eine Raumrichtung nach link, d.h. von der Kompensationsseite der Belüftungseinheit in Richtung der Einlassseite der Belüftungseinheit. Es ist im Sinne der Erfindung besonders bevorzugt, dass die Kräfte $F\_AE$ und $F\_AK$ entgegengesetzt zueinander wirken und vom Betrag her in etwa gleich groß sind. Dies wird insbesondere dadurch bewirkt, dass eine erste Wirkfläche des ersten Schiebe-Elements und eine zweite Wirkfläche des zweiten Schiebe-Elements im Kontext der vorliegenden Erfindung bevorzugt im Wesentlichen gleich groß sind.

Es ist im Sinne der Erfindung bevorzugt, dass auf die erste Wirkfläche eine Kraft F_AE wirkt und auf die zweite Wirkfläche eine Kraft F_AK wirkt, wobei die Kräfte F_AE und F_AK im Wesentlichen gleich groß sind. Mithin wird im Kontext der vorliegenden Erfindung die Relation

$$F\_AE = F\_AK$$

angestrebt.

Es ist im Sinne der Erfindung bevorzugt, dass ein oberer Balken des ersten Schiebe-Elements größer ist als ein oberer Balken des zweiten Schiebe-Elements. Dadurch wird vorteilhafterweise erreicht, dass der erste Schieber in der Lage ist, die erste Öffnung der Belüftungseinheit abzudecken und zu verschließen, während sich der zweite Schieber in der zweiten Öffnung bewegen und durch sie hindurchgleiten kann. Das bevorzugte Größenverhältnis zwischen den oberen Balken der Schiebe-Elemente ermöglicht das erfinderische Zusammenspiel der Elemente der vorgeschlagenen Belüftungseinheit, so dass eine Belüftungsstrom zur Abreinigung eines Filters erzeugt werden kann.

In einem weiteren Aspekt betrifft die Erfindung eine Verwendung eines Luftstroms, der unter Verwendung einer vorgeschlagenen Belüftungseinheit in das Innere eines Sauggeräts geleitet werden kann. Dadurch kann insbesondere eine Abreinigung eines Filters des Sauggeräts bewirkt werden. In noch einem weiteren Aspekt betrifft die Erfindung ein Sauggerät mit mindestens einer vorgeschlagenen Belüftungseinheit, wobei die mindestens eine Belüftungseinheit dazu eingerichtet ist, einen Luftstrom zur Abreinigung eines Filters des Sauggeräts zu erzeugen. Es ist im Sinne der Erfindung bevorzugt, dass ein Sauggerät beispielsweise zwei, drei oder vier vorgeschlagene Belüftungseinheiten aufweisen kann, die vorzugsweise parallel oder im Wesentlichen parallel zueinander angeordnet sein können. Beispielsweise kann jede Belüftungseinheit einem abzureinigenden Filter zugeordnet sein. Ein besonderer Vorteil bei der Verwendung von mehreren Belüftungseinheiten besteht darin, dass ein kontinuierlicher Betrieb des Sauggeräts ermöglicht werden kann. Wenn beispielsweise eine erste Belüftungseinheit in einer OffenStellung vorliegt, um das Abreinigen eines ersten Filters des Sauggeräts zu ermöglichen, kann der Saugbetrieb des Sauggeräts mit einer zweiten Belüftungseinheit fortgesetzt werden. Dabei liegt diese zweite Belüftungseinheit während der Abreinigung des ersten Filters in einer Geschlossen-Stellung vor, um den Saugbetrieb und den dafür erforderlichen Druckunterschied zwischen dem Inneren des Sauggeräts und dem Atmosphärendruck in der Umgebung des Sauggeräts aufrechtzuerhalten.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigen:

Fig. 1 Ansicht einer bevorzugten Ausgestaltung der vorgeschlagenen Belüftungseinheit im geschlossenen Zustand bzw. in der Geschlossen-Stellung der Wirkeinheit

Fig. 2 Ansicht einer bevorzugten Ausgestaltung der vorgeschlagenen Belüftungseinheit im geschlossenen Zustand bzw. in der Geschlossen-Stellung der Wirkeinheit, wobei insbesondere die Wirkflächen dargestellt sind

Fig. 3 Ansicht einer bevorzugten Ausgestaltung der vorgeschlagenen Belüftungseinheit im geschlossenen Zustand bzw. in der Geschlossen-Stellung der Wirkeinheit, wobei insbesondere die auf die Wirkflächen wirkenden Kräfte dargestellt sind

Fig. 4 Ansicht einer bevorzugten Ausgestaltung der vorgeschlagenen Belüftungseinheit im offenen Zustand bzw. in der Offen-Stellung der Wirkeinheit, wobei insbesondere der Luftstrom dargestellt ist

Fig. 5 Ansicht einer alternativen bevorzugten Ausgestaltung der vorgeschlagenen Belüftungseinheit im geschlossenen Zustand bzw. in der Geschlossen-Stellung der Wirkeinheit

Fig. 6 Ansicht einer alternativen bevorzugten Ausgestaltung der vorgeschlagenen Belüftungseinheit im geschlossenen Zustand bzw. in der Geschlossen-Stellung der Wirkeinheit, wobei insbesondere die Wirkflächen dargestellt sind

Fig. 7 Ansicht einer alternativen bevorzugten Ausgestaltung der vorgeschlagenen Belüftungseinheit im geschlossenen Zustand bzw. in der Geschlossen-Stellung der Wirkeinheit, wobei insbesondere die auf die Wirkflächen wirkenden Kräfte dargestellt sind

Fig. 8 Ansicht einer alternativen bevorzugten Ausgestaltung der vorgeschlagenen Belüftungseinheit im offenen Zustand bzw. in der Offen-Stellung der Wirkeinheit, wobei insbesondere der Luftstrom dargestellt ist

**Ausführungsbeispiele und Figurenbeschreibung:**

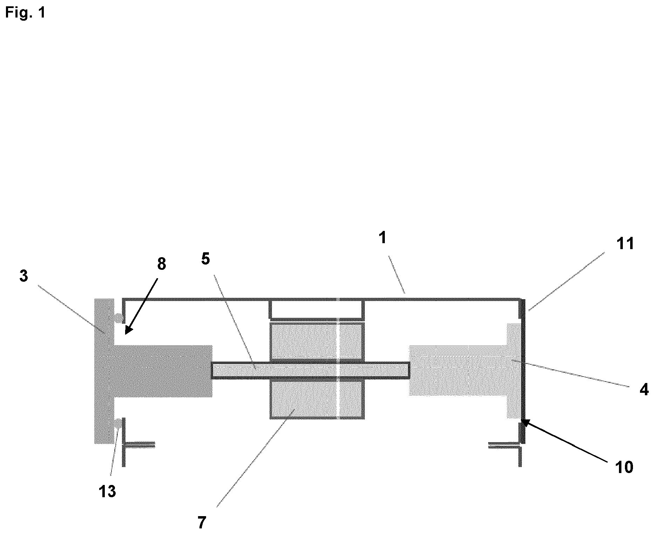

Figur 1 zeigt eine bevorzugte Ausgestaltung der vorgeschlagenen Belüftungseinheit 1 im geschlossenen Zustand bzw. in der Geschlossen-Stellung der Wirkeinheit 6. Die Wirkeinheit 6 umfasst ein erstes Schiebe-Element 3, ein zweites Schiebe-Element 4 und ein Verbindungsmittel 5. Das Verbindungsmittel 5 ist vorzugsweise als Schubstange ausgebildet. Es ist im Sinne der Erfindung insbesondere bevorzugt, dass das Verbindungsmittel 5 starr ausgebildet ist und die Schiebe-Elemente 3, 4 in einem konstanten Abstand zueinander hält. Vorzugsweise ist das erste Schiebe-Element 3 dazu eingerichtet, eine erste Öffnung 8 der Belüftungseinheit 1 abzuschließen, während das zweite Schiebe-Element 4 dazu eingerichtet ist, eine zweite Öffnung 10 der Belüftungseinheit 1 abzuschließen. Zwischen dem ersten Schiebe-Element 3 und einer Außenseite des Gehäuses der Belüftungseinheit 1 kann mindestens ein Dichtungselement 13 angeordnet sein, mit dem die erste Öffnung 8 der Belüftungseinheit 1 luftdicht abgeschlossen werden kann.

Es ist im Sinne der Erfindung bevorzugt, dass eine Bewegung des Verbindungsmittels 5 von einem Aktuator 7 bewirkt wird. Mit anderen Worten kann das Verbindungsmittel 5 mit dem Aktuator 7 bewegt werden. Insbesondere kann der Aktuator 7 das bevorzugt als Schubstange ausgebildete Verbindungsmittel 5 innerhalb der vorgeschlagenen Belüftungseinheit 1 hin- und herbewegen, wobei diese Bewegung des Verbindungsmittels 5 im Sinne der Erfindung bevorzugt als «seitliche Bewegung» bezeichnet wird. Vorzugweise wird durch die von dem Aktuator 7 bewirkte Bewegung des Verbindungsmittels 5 die gesamte Wirkeinheit 6, welche die Schiebe-Element 3, 4 und das Verbindungsmittel 5 umfasst, im Inneren der Belüftungseinheit 1 hin- und herbewegt.

Es ist im Sinne der Erfindung bevorzugt, dass eine Bewegung der Wirkeinheit 6 in Richtung der ersten Öffnung 8 als «Bewegung nach links» bezeichnet wird, während eine Bewegung der Wirkeinheit 6 in Richtung der zweiten Öffnung 10 der Belüftungseinheit 1 als «Bewegung nach rechts» bezeichnet wird. Wenn die Wirkeinheit 6 - wie in Figur 1 dargestellt - in der Geschlossen-Stellung vorliegt, ist die erste Öffnung 8 der Belüftungseinheit 1 verschlossen. Die erste Öffnung 8 kann durch eine Bewegung der Wirkeinheit 6 nach links geöffnet werden. Diese Öffnungsbewegung kann beispielsweise durch eine Bestromung des Aktuators 7 bewirkt werden. Alternativ oder ergänzend können die Rückstellkräfte eines elastischen Elements 11 verwendet werden, um die Wirkeinheit 6 zu einer Öffnungsbewegung nach links zu bewegen.

Durch die Bewegung der Wirkeinheit 6 nach links wird der obere Bereich des ersten Schiebe-Elements 3 von der ersten Öffnung 8 abgehoben, so dass ein Spalt entsteht, durch den ein Luftstrom LS in das Innere der Belüftungseinheit 1 eindringen kann. Die Schiebe-Elemente 3, 4 sind vorzugsweise T-förmig ausgebildet, wobei der obere Balken des bevorzugt T-förmig ausgebildeten Schiebe-Elements 3, 4 vorzugsweise als oberer Balken des Schiebe-Elements 3, 4 bezeichnet wird. Durch eine Bewegung der Wirkeinheit 6 nach rechts kann die erste Öffnung 8 der Belüftungseinheit wieder geschlossen werden.

Der Aktuator 7 kann vorzugsweise als Hub-Magnet ausgebildet sein, der insbesondere ein elektromagnetischer Hub-Magnet ist. Es ist im Sinne der Erfindung bevorzugt, dass der Aktuator 7 von einem elektrischen Strom durchflossen werden kann, wodurch dann eine Bewegung der Wirkeinheit 6 bewirkt wird. Es ist im Sinne der Erfindung bevorzugt, dass eine Bewegungsrichtung der Wirkeinheit 6 in Abhängigkeit von einer Bestromung bzw. deren Polung des Aktuators 7 erfolgt.

Es ist im Sinne der Erfindung bevorzugt, dass das zweite Schiebe-Element 4 der Wirkeinheit 6 in seiner Geschlossen-Stellung (siehe Fig. 1) flach an einer Außenseite des Gehäuses der vorgeschlagenen Belüftungseinheit 1 anliegt. Vorzugsweise schließen das zweite Schiebe-Element 4 und das elastische Element 11 die zweite Öffnung 10 der Belüftungseinheit 1 durch das Anliegen des elastischen Elements 11 zusammen ab. Es ist im Sinne der Erfindung bevorzugt, dass der obere Balken des bevorzugt T-förmig ausgebildeten zweiten Schiebe-Elements 4 kleiner ist als die zweite Öffnung 10 der Belüftungseinheit 1. Vorzugsweise befindet sich auf der Außenseite der Belüftungseinheit 1 ein Atmosphärendruck, der beispielsweise in einem Bereich von 1,013 hPa liegt. Im Inneren der Belüftungseinheit 1 liegt während des Saugbetrieb des Sauggeräts ein Unterdruck vor. Vorzugsweise wird dieser Unterdruck von einer Turbine erzeugt, wobei die Turbine von einem Elektromotor des Sauggeräts angetrieben werden kann. Der Unterdruck wird während des Saugbetriebs dazu verwendet, Staub oder Verunreinigungen in das Innere des Sauggeräts einzusaugen, wo Staub und Verunreinigungen in einem Staubsammelbehälter des Sauggeräts gesammelt werden können. Teile des Staubs bzw. der Verunreinigungen können jedoch auch in einen Filter des Sauggeräts gelangen und diesen Filter über die Zeit zusetzen oder verstopfen. Dieses Zusetzen des Filters soll durch eine regelmäßige Abreinigung des Filters vermieden werden. Zu diesem Zweck kann das Sauggerät eine vorgeschlagene Belüftungseinheit 1 aufweisen, die einen Luftstrom LS zum Durchspülen des Filters erzeugen kann. Es ist im Sinne der Erfindung ganz besonders bevorzugt, dass der Luftstrom LS, der zur Abreinigung des Filters des Sauggeräts verwendet wird, den Filter in einer Richtung durchspült, die der Richtung eines Saugluftstroms während des Saugbetriebs des Sauggeräts entgegengerichtet ist. Diese Durchspülung des Filters in Gegensaugrichtung wird im Sinne der Erfindung bevorzugt als «Rückspülung» bezeichnet. Es ist im Sinne der Erfindung ganz besonders bevorzugt, dass mit der vorgeschlagenen Belüftungseinheit 1 ein Rückspül-Luftstrom LS erzeugt werden kann, mit dem der Filter eines Sauggeräts durchspült werden kann. Dazu kann die Belüftungseinheit 1 mit dem Inneren 2 des Sauggeräts fluidisch verbunden sein. Beispielsweise können der Innenraum der Belüftungseinheit 1 und das Innere 2 des Sauggeräts miteinander verbunden vorliegen, so dass ein Luft- und Druckaustausch zwischen den Innenräumen erfolgen kann. Dies kann dazu führen, dass während des Saugbetriebs des Sauggeräts sowohl in dem Innenraum der Belüftungseinheit 1, als auch in dem Innenraum 2 des Sauggeräts ein Unterdruck herrschen kann, während in einer Umgebung des Sauggeräts ein Atmosphären- bzw. Umgebungsdruck herrscht. Durch das Öffnen der Belüftungseinheit 1 kann ein Druckausgleich zwischen dem Innenraum der Belüftungseinheit 1 bzw. des Sauggeräts und der Umgebung des Sauggeräts erfolgen, wodurch der Luftstrom LS zur Abreinigung des Filters des Sauggeräts entstehen kann. Dieser Luftstrom LS kann hochdynamisch in das Innere 2 der Belüftungseinheit 1 bzw. des Sauggeräts eindringen und mit großer Geschwindigkeit durch den Filter des Sauggeräts strömen. Durch diesen vorteilhafterweise schnell strömenden Luftstrom LS kann eine besonders effiziente und wirkungsvolle Abreinigung des Filters des Sauggeräts erzielt werden.

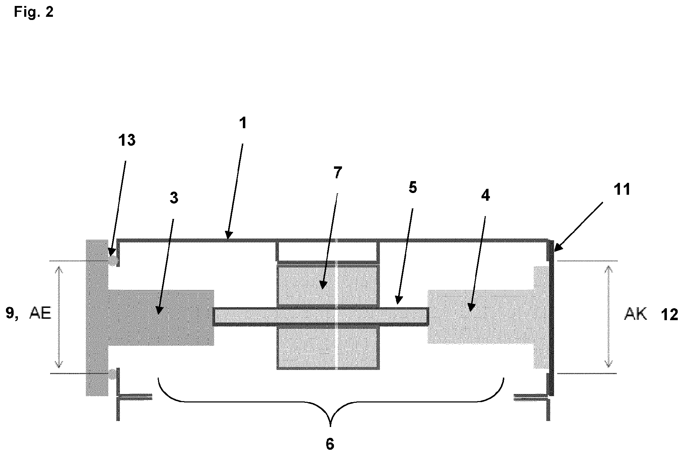

Fig. 2 zeigt eine bevorzugte Ausgestaltung der vorgeschlagenen Belüftungseinheit 1 im geschlossenen Zustand bzw. in der Geschlossen-Stellung der Wirkeinheit 6, wobei insbesondere die Wirkflächen 9, 12 dargestellt sind. Es ist im Sinne der Erfindung bevorzugt, dass die Größe der Wirkflächen 9, 12 im Wesentlichen der Größe der zugehörigen Öffnungen 8, 10 entspricht. Das bedeutet im Sinne der Erfindung bevorzugt, dass die erste Wirkfläche 9 des ersten Schiebe-Elements 3 im Wesentlichen der Größe der ersten Öffnung 8 der Belüftungseinheit 1 entspricht. Diese erste Wirkfläche 9 ist vorzugsweise kleiner als die Fläche des oberen Balkens des vorzugsweise T-förmig ausgebildeten ersten Schiebe-Elements 3. Es ist im Sinne der Erfindung bevorzugt, dass die zweite Wirkfläche 12 des zweiten Schiebe-Elements 4 im Wesentlichen der Größe der zweiten Öffnung 10 der Belüftungseinheit 1 entspricht. Diese zweite Wirkfläche 12 ist im Wesentlichen so groß wie der obere Balken des vorzugsweise T-förmig ausgebildeten zweiten Schiebe-Elements 4. Es ist im Sinne der Erfindung bevorzugt, dass sowohl die Größen der Öffnungen 8, 10, als auch die beiden Wirkflächen 9, 12 im Wesentlichen gleich groß sind.

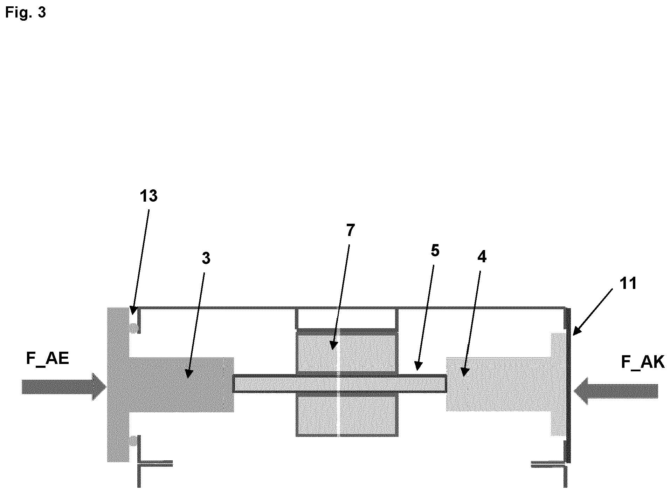

Dies führt vorteilhafterweise dazu, dass die Kräfte, die auf die Schiebe-Elemente 3, 4 wirken, im Wesentlichen gleicht groß sind. Diese Kräfte $F\_AK$ und $F\_AE$ sind in Fig. 3 dargestellt. Es ist im Sinne der Erfindung bevorzugt, dass auf den ersten Schieber 3 die Kraft $F\_AE$ wirkt, die im Sinne der Erfindung auch als Einlasskraft bezeichnet werden kann. Dementsprechend kann der erste Schieber 3 vorzugsweise auch als Einlass-Schieber bezeichnet werden. Vorzugsweise wirkt auf den zweiten Schieber 4 die Kompensationskraft $F\_AK$, wobei die Einlasskraft $F\_AE$ vorzugsweise in eine Raumrichtung nach rechts wirkt, während die Kompensationskraft $F\_AK$ bevorzugt in einer Raumrichtung nach links wirkt.

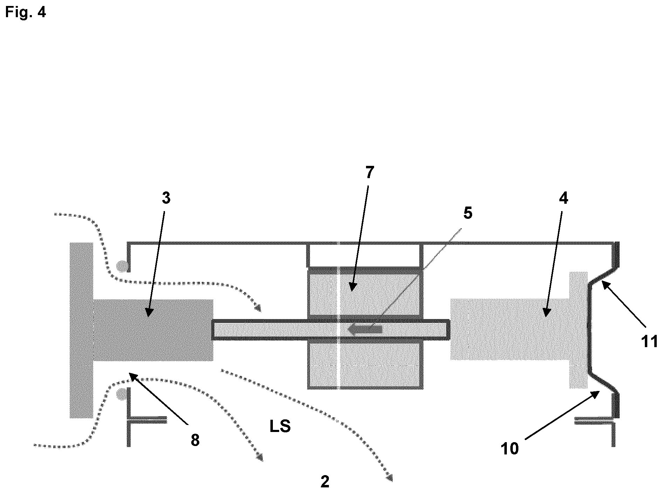

Um die Wirkeinheit 6 aus der Geschlossen-Stellung, die beispielsweise in den Fig. 1 bis 3 dargestellt ist, in eine Offen-Stellung (siehe Fig. 4) zu bringen, muss die Einlasskraft $F\_AE$ überwunden werden. Dies kann beispielsweise mit der Kompensationskraft $F\_AK$ geschehen. Ein wesentlicher Vorteil der Erfindung besteht darin, dass die Belüftungseinheit 1 besonders reibungsarm ausgebildet ist, so dass es bei der Bewegung des Verbindungsmittels 5 bzw. der Wirkeinheit 6 nur zu geringen Energieverlusten kommt. Es ist im Sinne der Erfindung ganz besonders bevorzugt, dass der Druckunterschied zwischen dem Inneren 2 des Sauggeräts bzw. der Belüftungseinheit 1 und der Umgebung des Sauggeräts unabhängig von einem Differenzdruck in Bezug auf den Atmosphärendruck im Sauggeräts kompensiert werden kann.

Fig. 4 zeigt eine bevorzugte Ausgestaltung der vorgeschlagenen Belüftungseinheit 1 im offenen Zustand bzw. in der Offen-Stellung der Wirkeinheit 6, wobei insbesondere der Luftstrom LS dargestellt ist, mit dem ein Filter des Sauggeräts abgereinigt bzw. durchspült werden kann. In dem in Fig. 4 dargestellten Zustand der vorgeschlagenen Belüftungseinheit 1 ist die erste Öffnung 8 der Belüftungseinheit 1 geöffnet, wobei das Öffnen der ersten Öffnung 8 insbesondere durch eine seitliche Bewegung der Wirkeinheit 6 im Inneren der Belüftungseinheit 1 erfolgt. Es ist im Sinne der Erfindung ganz besonders bevorzugt, dass die erste Öffnung 8 der Belüftungseinheit 1 durch eine Bewegung des Verbindungsmittels 5 bzw. der Wirkeinheit 6 nach links geöffnet wird. Dies geschieht insbesondere dadurch, dass der obere Bereich des ersten Schiebe-Elements 3 von der ersten Öffnung 8 abgehoben wird, so dass ein Spalt entsteht, durch den der Abreinigungs-Luftstrom LS in das Innere 2 der Belüftungseinheit 1 bzw. des Sauggeräts einströmen kann. Die Bewegung der Wirkeinheit 6 nach links zum Öffnen der Belüftungseinheit 1 ist in Fig. 4 mit dem nach links weisenden Pfeil im Inneren des Verbindungsmittels 5 angedeutet. Die gestrichelten Pfeile in Inneren 2 des Sauggeräts bzw. der Belüftungseinheit 1 deuten den Luftstrom LS und mögliche Verläufe an. In der Offen-Stellung der Wirkeinheit 6 liegt das elastische Element 11 vorzugsweise nach innen in einen Innenraum der vorgeschlagenen Belüftungseinheit 1 hinein gewölbt vor. Das elastische Element 11 kann beispielsweise an dem vorzugsweise T-förmig ausgebildeten Balken des zweiten Schiebe-Elements 4 befestigt vorliegen, so dass es durch die Seitwärtsbewegung der Wirkeinheit 6 nach innen, d.h. nach links in das Innere der Belüftungseinheit 1 hinein, gezogen wird.

Es ist im Sinne der Erfindung bevorzugt, dass die zweite Öffnung 10 der Belüftungseinheit 1 sowohl in der Geschlossen-Stellung, als auch in der Offen-Stellung der Wirkeinheit 6 verschlossen ist. Darüber hinaus ist es im Sinne der Erfindung bevorzugt, dass die Belüftungseinheit 1 dadurch geschlossen werden kann, dass der Aktuator 7, insbesondere dann, wenn er als elektromagnetischer Hub-Magnet ausgebildet ist, elektrisch gegengepolt wird. Das bedeutet im Sinne der Erfindung bevorzugt, dass die Stromflussrichtung im Vergleich zum Öffnen der Belüftungseinheit 1 umgedreht wird. Somit fließt der Strom in umgekehrter Richtung durch den Aktuator 7 und die Wirkeinheit 6 kann - anstatt nach links zum Öffnen der Belüftungseinheit 1 - zu deren Schließen verwendet werden.

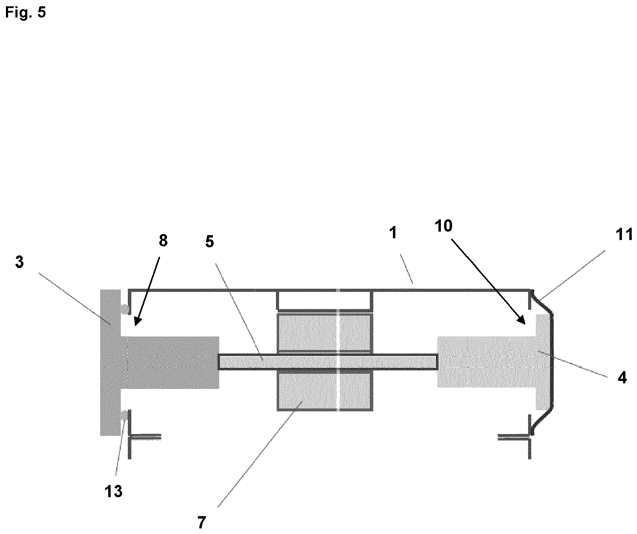

Figur 5 zeigt eine alternative bevorzugte Ausgestaltung der vorgeschlagenen Belüftungseinheit 1 im geschlossenen Zustand bzw. in der Geschlossen-Stellung der Wirkeinheit 6. Es ist im Sinne der Erfindung bevorzugt, dass das zweite Schiebe-Element 4 der Wirkeinheit 6 in seiner Geschlossen-Stellung der in Fig. 5 dargestellten alternativen Ausgestaltung der Erfindung über das Gehäuse der vorgeschlagenen Belüftungseinheit 1 übersteht. Durch diesen Überstand des zweiten Schiebe-Elements 4 kann das elastisches Element 11 aufgespannt werden. Vorzugsweise schließen das zweite Schiebe-Element 4 und das elastische Element 11 die zweite Öffnung 10 der Belüftungseinheit 1 zusammen ab. Es ist im Sinne der Erfindung bevorzugt, dass der obere Balken des bevorzugt T-förmig ausgebildeten zweiten Schiebe-Elements 4 kleiner ist als die zweite Öffnung 10 der Belüftungseinheit 1, so dass das zweite Schiebe-Element 4 durch die zweite Öffnung 10 geführt werden kann.

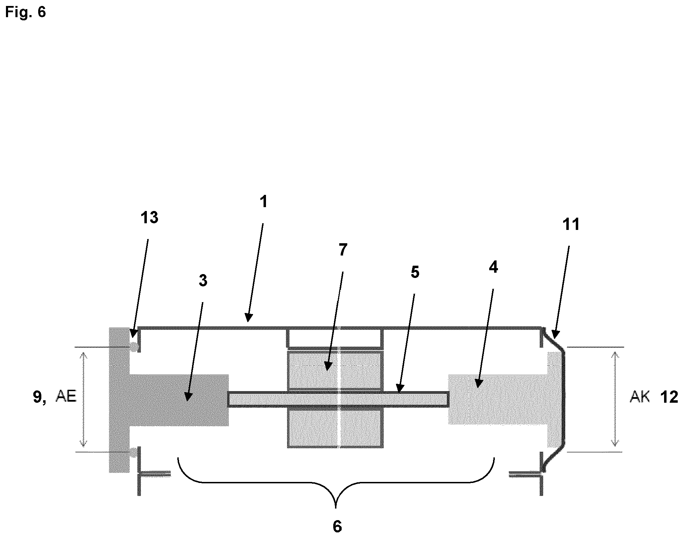

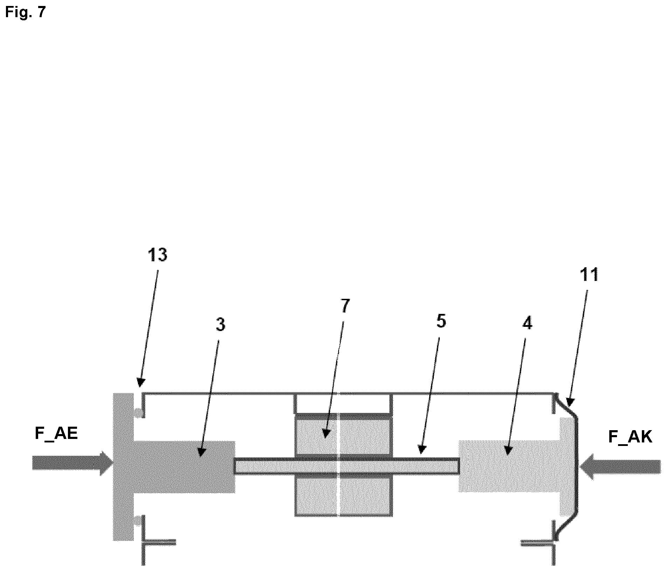

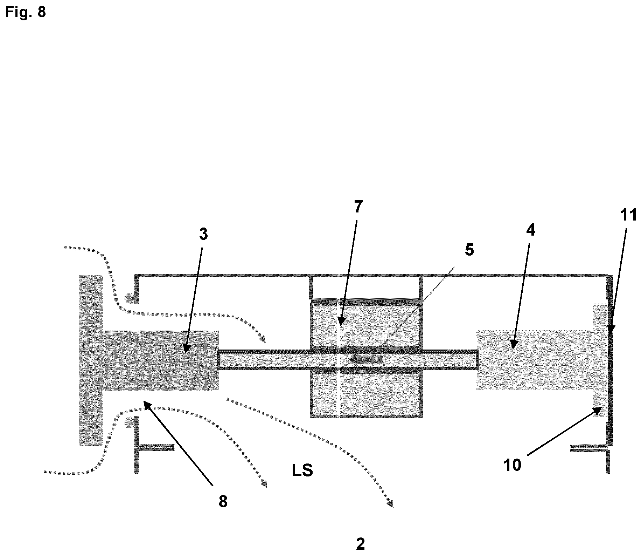

Fig. 6 zeigt die alternative bevorzugte Ausgestaltung der vorgeschlagenen Belüftungseinheit 1 im geschlossenen Zustand bzw. in der Geschlossen-Stellung der Wirkeinheit 6, wobei insbesondere die Wirkflächen 9, 12 dargestellt sind. Um die Wirkeinheit 6 aus der Geschlossen-Stellung, die beispielsweise in den Fig. 5 bis 7 dargestellt ist, in eine Offen-Stellung (siehe Fig. 8) zu bringen, muss die Einlasskraft F_AE überwunden werden.

Fig. 8 zeigt die alternative Ausgestaltung der vorgeschlagenen Belüftungseinheit 1 im offenen Zustand bzw. in der Offen-Stellung der Wirkeinheit 6, wobei insbesondere der Luftstrom LS dargestellt ist, mit dem ein Filter des Sauggeräts abgereinigt bzw. durchspült werden kann. In dem in Fig. 8 dargestellten Zustand der vorgeschlagenen Belüftungseinheit 1 ist die erste Öffnung 8 der Belüftungseinheit 1 geöffnet, wobei das Öffnen der ersten Öffnung 8 insbesondere durch eine seitliche Bewegung der Wirkeinheit 6 im Inneren der Belüftungseinheit 1 erfolgt. Die Bewegung der Wirkeinheit 6 nach links zum Öffnen der Belüftungseinheit 1 ist in Fig. 8 mit dem nach links weisenden Pfeil im Inneren des Verbindungsmittels 5 angedeutet. Die gestrichelten Pfeile in Inneren 2 des Sauggeräts bzw. der Belüftungseinheit 1 deuten den Luftstrom LS und mögliche Verläufe an.

In dieser alternativen Ausgestaltung der Erfindung liegt das elastische Element 11 in der OffenStellung der Wirkeinheit 6 im Wesentlichen vollständig eng an der Außenwand der Belüftungseinheit 1 an. Der Überstand des zweiten Schiebe-Elements 4, der während der Geschlossen-Stellung der Wirkeinheit 6 vorliegt, wird durch das Öffnen der Belüftungseinheit 1 abgebaut und liegt in der Offen-Stellung der Wirkeinheit 6 nicht mehr vor. Dadurch wird das elastische Element 11 nicht mehr aufgespannt, sondern es kann auf der Außenseite der Belüftungseinheit 1 anliegen. Es ist auch in der alternativen Ausgestaltung der Erfindung bevorzugt, dass die zweite Öffnung 10 der Belüftungseinheit 1 sowohl in der Geschlossen-Stellung, als auch in der OffenStellung der Wirkeinheit 6 verschlossen ist.

**Bezugszeichenliste**

1    Belüftungseinheit
2    Innenraum eines Sauggeräts
3    erstes Schiebe-Element
4    zweites Schiebe-Element
5    Verbindungselement
6    Wirkeinheit
7    Aktuator
8    erste Öffnung
9    erste Wirkfläche
10   zweite Öffnung
11   elastisches Element
12   zweite Wirkfläche
13   Dichtungselemente
LS   Luftstrom

**Patentansprüche**

1.   Belüftungseinheit (1) für ein Sauggerät, wobei die Belüftungseinheit (1) dazu eingerichtet ist, einen Luftstrom (LS) in einen Innenraum (2) des Sauggeräts einzulassen, wobei die Belüftungseinheit (1) ein erstes Schiebe-Element (3) und ein zweites Schiebe-Element (4) aufweist, die mit einem Verbindungselement (5) verbunden vorliegen, wobei das erste Schiebe-Element (3), das zweite Schiebe-Element (4) und das Verbindungselement (5) eine Wirkeinheit (6) bilden, die von einem Aktuator (7) von einer Geschlossen-Stellung in eine Offen-Stellung bringbar ist, und umgekehrt,
     **dadurch gekennzeichnet, dass** eine erste Wirkfläche (9) des ersten Schiebe-Elements (3) und eine zweite Wirkfläche (12) des zweiten Schiebe-Elements (4) im Wesentlichen gleich groß sind, wobei die Belüftungseinheit (1) eine erste Öffnung (8) und eine zweite Öffnung (10) aufweist. und wobei ein elastisches Element (11) vorliegt, das mit einem oberen Bereich des zweiten Schiebe-Elements verbunden ist und flach an einer Außenseite der Belüftungseinheit (1) anliegt, um zusammen mit dem zweiten Schiebe-Element (4) die zweite Öffnung der Belüftungseinheit (1) abzuschließen.

2. Belüftungseinheit (1) nach Anspruch 1
**dadurch gekennzeichnet, dass**
der Aktuator (7) einen elektromagnetischen Hubmagneten umfasst.

3. Belüftungseinheit (1) nach Anspruch 1 oder 2
**dadurch gekennzeichnet, dass**
die Belüftungseinheit (1) eine erste Öffnung (8) aufweist, die von dem ersten Schiebe-Element (3) verschliessbar ist.

4. Belüftungseinheit (1) nach Anspruch 3
**dadurch gekennzeichnet, dass**
das erste Schiebe-Element (3) eine erste Wirkfläche (9) aufweist, die im Wesentlichen einer Größe der ersten Öffnung (8) der Belüftungseinheit (1) entspricht.

5. Belüftungseinheit (1) nach Anspruch 3 oder 4
**dadurch gekennzeichnet, dass**
im Bereich der ersten Öffnung (8) Dichtungselemente (13) angeordnet vorliegen, wobei die Dichtungselemente (13) dazu eingerichtet sind, die erste Öffnung (8) der Belüftungseinheit (1) abzudichten.

6. Belüftungseinheit (1) nach einem der vorhergehenden Ansprüche
**dadurch gekennzeichnet, dass**
die Belüftungseinheit (1) eine zweite Öffnung (10) aufweist.

7. Belüftungseinheit (1) nach einem der vorhergehenden Ansprüche
**dadurch gekennzeichnet, dass**
das zweite Schiebe-Element (4) eine zweite Wirkfläche (12) aufweist, die im Wesentlichen einer Größe eines oberen Balkens des zweiten Schiebe-Elements (4) entspricht.

8. Belüftungseinheit (1) nach einem der vorhergehenden Ansprüche
**dadurch gekennzeichnet, dass**
auf die erste Wirkfläche (9) eine Kraft F_AE wirkt und auf die zweite Wirkfläche (12) eine Kraft F_AK wirkt, wobei die Kräfte F_AE und F_AK im Wesentlichen gleich groß sind.

9. Belüftungseinheit (1) nach einem der vorhergehenden Ansprüche
**dadurch gekennzeichnet, dass**
ein oberer Balken des ersten Schiebe-Elements (3) größer ist als ein oberer Balken des zweiten Schiebe-Elements (4).

10. Belüftungseinheit (1) nach einem der vorhergehenden Ansprüche
**dadurch gekennzeichnet, dass**
das Verbindungselement (5) der Wirkeinheit (6) starr und/oder als Schubstange ausgebildet ist.

11. Verfahren zum Belüften eines Sauggeräts mit einer Belüftungseinheit (1) nach einem der vorhergehenden Ansprüche, wobei das Verfahren durch die folgenden Verfahrensschritte **gekennzeichnet** ist:

a) Bereitstellung eines Sauggeräts mit einer Belüftungseinheit (1) nach einem der vorhergehenden Ansprüche, wobei die Wirkeinheit (6) in einer Geschlossen-Stellung vorliegt,
b) Betätigung des Aktuators (7), so dass die Wirkeinheit (6) durch den Aktuator (7) in eine Offen-Stellung gebracht wird,
c) Belüftung eines Innenraums (2) des Sauggeräts durch einen Luftstrom (LS), der durch eine von einem ersten Schiebe-Element (3) freigegebene erste Öffnung (8) der Belüftungseinheit (1) in den Innenraum (2) der Belüftungseinheit (1) und/oder des Sauggeräts eindringen kann.

12. Verwendung eines Luftstroms (LS), der unter Verwendung einer Belüftungseinheit (1) nach einem der Ansprüche 1 bis 10 in einen Innenraum (2) eines Sauggeräts geleitet werden kann, zur Abreinigung eines Filters des Sauggeräts.

13. Sauggerät mit mindestens einer Belüftungseinheit (1) nach einem der Ansprüche 1 bis 10
**dadurch gekennzeichnet, dass**
die mindestens eine Belüftungseinheit (1) dazu eingerichtet ist, einen Luftstrom (LS) zur Abreinigung eines Filters des Sauggeräts zu erzeugen.

**Claims**

1. Ventilation unit (1) for a suction device, wherein the ventilation unit (1) is designed to let an air flow (LS) into an interior (2) of the suction device, wherein the ventilation unit (1) has a first sliding element (3) and a second sliding element (4), which are connected by a connecting element (5), wherein the first sliding element (3), the second sliding element (4) and the connecting element (5) form an active unit (6), which is able to be brought from a closed position into an open position, and vice versa, by an actuator (7), **characterized in that**

a first active surface (9) of the first sliding element (3) and a second active surface (12) of the second sliding element (4) are substantially the same size,
wherein the ventilation unit (1) has a first opening (8) and a second opening (10),
and wherein there is an elastic element (11), which is connected to an upper region of the second sliding element and bears flat against an outer side of the ventilation unit (1) in order to close off, together with the second sliding element (4), the second opening of the ventilation unit (1).

2. Ventilation unit (1) according to Claim 1,
   **characterized in that**
   the actuator (7) comprises an electromagnetic lifting magnet.

3. Ventilation unit (1) according to Claim 1 or 2,
   **characterized in that**
   the ventilation unit (1) has a first opening (8), which is able to be closed by the first sliding element (3).

4. Ventilation unit (1) according to Claim 3,
   **characterized in that**
   the first sliding element (3) has a first active surface (9), which corresponds substantially to a size of the first opening (8) of the ventilation unit (1).

5. Ventilation unit (1) according to Claim 3 or 4,
   **characterized in that**
   sealing elements (13) are arranged in the region of the first opening (8), wherein the sealing elements (13) are designed to seal off the first opening (8) of the ventilation unit (1).

6. Ventilation unit (1) according to one of the preceding claims,
   **characterized in that**
   the ventilation unit (1) has a second opening (10).

7. Ventilation unit (1) according to one of the preceding claims,
   **characterized in that**
   the second sliding element (4) has a second active surface (12), which corresponds substantially to a size of an upper bar of the second sliding element (4).

8. Ventilation unit (1) according to one of the preceding claims,
   **characterized in that**
   a force F_AE acts on the first active surface (9) and a force F_AK acts on the second active surface (12), wherein the forces F_AE and F_AK are substantially the same size.

9. Ventilation unit (1) according to one of the preceding claims,
   **characterized in that**
   an upper bar of the first sliding element (3) is larger than an upper bar of the second sliding element (4).

10. Ventilation unit (1) according to one of the preceding claims,
    **characterized in that**

the connecting element (5) of the active unit (6) is rigid and/or in the form of a push rod.

11. Method for ventilating a suction device with a ventilation unit (1) according to one of the preceding claims, wherein the method is **characterized by** the following method steps:

    a) providing a suction device having a ventilation unit (1) according to one of the preceding claims, wherein the active unit (6) is in a closed position,
    b) actuating the actuator (7) such that the active unit (6) is brought into an open position by the actuator (7),
    c) ventilating an interior (2) of the suction device by way of an air flow (LS), which can pass into the interior (2) of the ventilation unit (1) and/or of the suction device through a first opening (8), exposed by a first sliding element (3), of the ventilation unit (1).

12. Use of an air flow (LS), which can be conducted into an interior (2) of a suction device using a ventilation unit (1) according to one of Claims 1 to 10, to dedust a filter of the suction device.

13. Suction device having at least one ventilation unit (1) according to one of Claims 1 to 10,
    **characterized in that**
    the at least one ventilation unit (1) is designed to generate an air flow (LS) for dedusting a filter of the suction device.

**Revendications**

1. Unité d'aération (1) pour un appareil d'aspiration, l'unité d'aération (1) étant mise au point pour faire entrer un flux d'air (LS) dans un espace intérieur (2) de l'appareil d'aspiration, l'unité d'aération (1) comportant un premier élément coulissant (3) et un deuxième élément coulissant (4), qui sont reliés à un élément de liaison (5), le premier élément coulissant (3), le deuxième élément coulissant (4) et l'élément de liaison (5) formant une unité fonctionnelle (6), qui peut être amenée par un actionneur (7), depuis une position fermée dans une position ouverte, et inversement,
   **caractérisée en ce que**

   une première surface fonctionnelle (9) du premier élément coulissant (3) et une deuxième surface fonctionnelle (12) du deuxième élément coulissant (4) sont sensiblement de même taille, l'unité d'aération (1) comportant une première ouverture (8) et une deuxième ouverture (10), et un élément élastique (11) étant présent, qui est relié à une zone supérieure du deuxième élément coulissant et repose à plat sur un côté extérieur de l'unité d'aération (1) pour fermer la deuxième ouverture de l'unité d'aération (1) conjointement avec le deuxième élément coulissant (4).

2. Unité d'aération (1) selon la revendication 1, **caractérisée en ce que** l'actionneur (7) comprend un aimant de levage électromagnétique.

3. Unité d'aération (1) selon la revendication 1 ou 2, **caractérisée en ce que** l'unité d'aération (1) comporte une première ouverture (8), qui peut être fermée par le premier élément coulissant (3).

4. Unité d'aération (1) selon la revendication 3, **caractérisée en ce que** le premier élément coulissant (3) comporte une première surface fonctionnelle (9), qui correspond sensiblement à une dimension de la première ouverture (8) de l'unité d'aération (1).

5. Unité d'aération (1) selon la revendication 3 ou 4, **caractérisée en ce que** des éléments d'étanchéité (13) sont disposés dans la zone de la première ouverture (8), les éléments d'étanchéité (13) étant mis au point pour étanchéifier la première ouverture (8) de l'unité d'aération (1).

6. Unité d'aération (1) selon l'une des revendications précédentes, **caractérisée en ce que** l'unité d'aération (1) comporte une deuxième ouverture (10).

7. Unité d'aération (1) selon l'une des revendications précédentes, **caractérisée en ce que** le deuxième élément coulissant (4) comporte une deuxième surface fonctionnelle (12), qui correspond sensiblement à une dimension d'une poutre supérieure du deuxième élément coulissant (4).

8. Unité d'aération (1) selon l'une des revendications précédentes, **caractérisée en ce que** une force F_AE agit sur la première surface fonctionnelle (9) et une force F_AK agit sur la deuxième surface fonctionnelle (12), les forces F_AE et F_AK étant sensiblement égales.

9. Unité d'aération (1) selon l'une des revendications précédentes, **caractérisée en ce que** une poutre supérieure du premier élément coulissant (3) est plus grande qu'une poutre supérieure du deuxième élément coulissant (4).

10. Unité d'aération (1) selon l'une des revendications précédentes, **caractérisée en ce que** l'élément de liaison (5) de l'unité fonctionnelle (6) est réalisé de manière rigide et/ou comme une tige de poussée.

11. Procédé destiné à aérer un appareil d'aspiration avec une unité d'aération (1) selon l'une des revendications précédentes, le procédé étant **caractérisé par** les étapes de procédé suivantes :

    a) fourniture d'un appareil d'aspiration avec une unité d'aération (1) selon l'une des revendications précédentes, l'unité fonctionnelle (6) étant présente dans une position fermée,
    b) actionnement de l'actionneur (7) de telle sorte que l'unité fonctionnelle (6) est amenée par l'actionneur (7) dans une position ouverte,
    c) aération d'un espace intérieur (2) de l'appareil d'aspiration par un flux d'air (LS), qui peut entrer dans l'espace intérieur (2) de l'unité d'aération (1) et/ou de l'appareil d'aspiration par une première ouverture (8) de l'unité d'aération (1) dégagée par un premier élément coulissant (3).

12. Utilisation d'un flux d'air (LS), qui peut être acheminé dans un espace intérieur (2) d'un appareil d'aspiration en utilisant une unité d'aération (1) selon l'une des revendications 1 à 10, pour nettoyer un filtre de l'appareil d'aspiration.

13. Appareil d'aspiration avec au moins une unité d'aération (1) selon l'une des revendications 1 à 10, **caractérisé en ce que** l'au moins une unité d'aération (1) est mise au point pour produire un flux d'air (LS) pour nettoyer un filtre de l'appareil d'aspiration.

Fig. 1

**Fig. 2**

Fig. 3

**Fig. 4**

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013007183 A